# FASCICULE DE BREVET EUROPEEN

(11) **EP 2 768 888 B1**
(45) Date de publication et mention de la délivrance du brevet: **23.03.2016**
(21) Numéro de dépôt: 12787772.8
(22) Date de dépôt: 16.10.2012
(51) Int. Cl.: C08L 67/02, C08J 5/18, C08K 3/36, C08J 3/20

(54) **COMPOSITES À BASE DE PBS ET DE SILICE**
COMPOSITES BASED ON SILICA AND PBS
KOMPOSITE AUS SILICA UND PBS

(30) Priorité: 17.10.2011 FR 1159378
(43) Date de publication de la demande: 27.08.2014
(73) Titulaire: Roquette Frères, 62136 Lestrem (FR)
(72) Inventeur: JACQUEL, Nicolas, F-59130 Lambersart (FR); SAINT-LOUP, René, F-59160 Lomme (FR); FENOUILLOT-RIMLINGER, Françoise, F-38080 l'Isle d'Abeau (FR); PASCAULT, Jean-Pierre, F-69100 Villeurbanne (FR); ROUSSEAU, Alain, F-69800 Saint Priest (FR)
(74) Mandataire: Tezier Herman, Béatrice
(86) Numéro de dépôt international: PCT/FR2012/052360
(87) Numéro de publication internationale: WO 2013/057423

(56) Documents cités:
- EP-B1- 1 572 795
- US-A- 5 397 827
- VASSILIOU A A; BIKIARIS D; EL MABROUK K; KONTOPOULOU M: "Effect of evolved interactions in poly(butylene succinate)/fumed silica biodegradable in situ prepared nanocomposites on molecular weight, material properties, and biodegradability", JOURNAL OF APPLIED POLYMER SCIENCE, vol. 119, 25 août 2010 (2010-08-25), pages 2010-2024, XP002674076,
- BIAN J; HAN L; WANG X; WEN X; HAN C; WANG S; DONG L: "Nonisothermal crystallization behavior and mechanical properties of poly(butylene succinate)/silica nanocomposites", JOURNAL OF APPLIED POLYMER SCIENCE, vol. 116, 10 décembre 2009 (2009-12-10), pages 902-912, XP002674077,
- HAN S I ET AL: "In situ polymerized poly(butylene succinate)/silica nanocomposites: Physical properties and biodegradation", POLYMER DEGRADATION AND STABILITY, BARKING, GB, vol. 93, no. 5, 1 mai 2008 (2008-05-01), pages 889-895, XP022625321, ISSN: 0141-3910, DOI: 10.1016/J.POLYMDEGRADSTAB.2008.02.007 [extrait le 2008-02-29]

## Description

### Résumé de l'invention

La présente invention se rapporte à des composites à base de PBS et de silice, lesquels ont une gonflabilité élevée. Elle se rapporte également à un procédé de préparation de ces composites, à un procédé de gonflage de ces composites et à des films obtenus par gonflage de ces composites.

### Arrière-plan technologique de l'invention

Le poly(butylène succinate) (PBS), également appelé poly(tétraméthylène succinate), est un polymère thermoplastique formé par polymérisation d'acide succinique, ou d'au moins un diester d'acide succinique, tel que le succinate de diméthyle, et de 1,4-butanediol. Le PBS est bien connu et utilisé notamment pour des applications dans lesquelles sa bio-dégradabilité est un atout, par exemple pour la fabrication de couverts jetables, des filets de pêche, ou des films de paillage.

Les films sont principalement fabriqués par gonflage (ou soufflage de gaine), cette technique permettant la fabrication de films de grande dimension, c'est-à-dire pouvant atteindre plus d'un mètre dans chacune de ses deux dimensions. Cependant, afin de fabriquer ces films par gonflage, le PBS doit pouvoir être étiré dans deux dimensions dans son état fondu, ceci de préférence sans qu'aucun phénomène de rupture ne soit observé lors de la préparation de la gaine soufflée.

Le PBS est généralement obtenu en deux étapes : dans une première étape, on fabrique des oligomères par une réaction de polyestérification de l'acide succinique ou du diester d'acide succinique et du 1,4-butanediol. Dans une seconde étape, on augmente la masse du polymère en réalisant une réaction de transestérification des oligomères obtenus lors de la première étape.

Or, lors de la synthèse du PBS, les réactions de polyestérification et de transestérification doivent être suffisamment longues si l'on souhaite que le PBS soit apte à être étiré par gonflage. Il en découle que la productivité du PBS gonflable est limitée par ces longs temps de réactions.

L'introduction de silice pyrogénée dans le PBS peut être réalisée par mélange à l'état fondu du polymère avec la silice tel que décrit par Bian et al. (J. Appl Pol. Sci., 2009, 116, 902-912). Cette introduction de silice pyrogénée dans le composite peut également être réalisée en faisant réagir *in situ* les monomères constitutifs du polymère avec de la silice pyrogénée. L'introduction de nanocharges de silice pyrogénée lors de la préparation de films de poly(butylène succinate) et l'amélioration des propriétés mécaniques du produit qui en découle ont déjà été décrites par Vassiliou et al. (J. Appl. Pol. Sci. 2010, 119, 2010-2024).

Ainsi, Vassiliou décrit une augmentation du module d'Young et des contraintes au seuil et à la rupture, ce qui s'accompagne d'une diminution de l'allongement à la rupture du poly(butylène succinate) quand on augmente la quantité de silice pyrogénée qui y est incorporée. Or, il est important que les matériaux formés à partir de ces composites, notamment des films gonflés, présentent une élongation à la rupture importante et que cette élongation soit homogène, ceci quel que soit le sens de sollicitation du matériau, notamment lorsque l'on utilise ces films dans des procédés de fabrication industrielle.

De plus, Vassiliou ne décrit pas l'obtention d'un matériau hautement gonflable par l'addition de cette silice dans le PBS.

La préparation de tels composites par réaction *in situ* a également été décrite par Han et al. (Pol. Deg and Stab., 2008, 116, 889-895).

La Demanderesse a démontré que, de façon inattendue, l'incorporation de silice colloïdale lors de la préparation de PBS permet d'obtenir un matériau composite hautement gonflable.

Ce matériau composite à base de PBS et de silice colloïdale peut être obtenu plus rapidement qu'avec les procédés classiques de fabrication de PBS gonflable. Il présente une élongation à la rupture importante, et ceci quel que soit le sens dans lequel le matériau est sollicité.

Elle a ainsi également développé un procédé de gonflage de films de ce composite.

### Description détaillée de l'invention

La présente invention concerne des composites à base de PBS et de silice.

### Préparation d'un composite à base de PBS et de silice :

La présente invention concerne un procédé de préparation d'un composite à base de PBS et de silice, comprenant les deux étapes suivantes :
   - formation d'oligomères par réaction d'acide succinique ou d'au moins un diester d'acide succinique avec du 1,4-butanediol (étape 1), et
   - transestérification et couplage des oligomères formés à la première étape (étape 2),
   et comprenant l'ajout de silice colloïdale *in situ* au début ou au cours de l'étape 1 ou au début ou au cours de l'étape 2.

Ainsi, selon la première variante où l'acide succinique est utilisé pour la formation d'oligomères, la préparation du composite selon l'invention comprend les deux étapes suivantes :
1) Première étape : estérification et formation d'oligomères par réaction de l'acide succinique avec du 1,4-butanediol, par exemple selon le schéma: 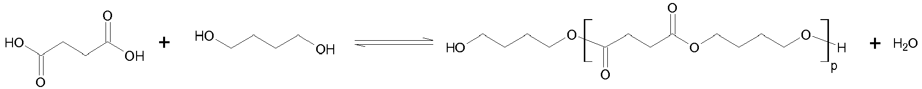
2) Seconde étape : transestérification et couplage des oligomères formés à la première étape pour former un polymère, par exemple selon le schéma suivant :

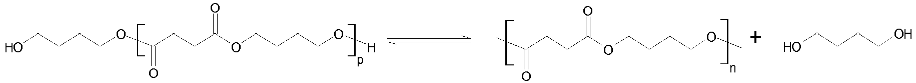

Selon la seconde variante où le diester d'acide succinique est utilisé, le procédé est identique, à la différence près que la première étape de formation d'oligomères est réalisée par transestérification d'ester d'acide succinique et de 1,4-butanediol : on forme alors lors de cette étape 1 de cette variante un oligomère et un alcool.

Selon la première variante, la première étape est réalisée avec élimination partielle ou totale de l'eau formée lors de la réaction d'estérification entre une molécule d'acide succinique et une molécule de 1,4-butanediol. Dans le cas de la seconde variante, on effectue une élimination partielle ou totale de l'alcool issu de la réaction de transestérification du diester et du 1,4-butanediol. Selon chacune des deux variantes, la première étape peut être réalisée en présence d'un catalyseur d'estérification ou de transestérification, en particulier si celui-ci est inerte vis-à-vis de l'eau et/ou de l'alcool formé.

La première étape est réalisée en présence d'un nombre d'équivalents de 1,4-butanediol, par rapport à l'acide succinique ou par rapport au diester d'acide succinique, susceptible de varier dans une large mesure, notamment entre 0,5 et 10 équivalents, avantageusement entre 0,8 et 2 équivalents, et préférentiellement entre 0,9 et 1,2 équivalents de 1,4-butanediol par rapport à l'acide succinique ou au diester d'acide succinique. De préférence, la première étape est réalisée en présence d'un excès de 1,4-butanediol par rapport à l'acide succinique ou au diester d'acide succinique, par exemple entre 1,02 et 1,2 équivalents.

La seconde étape est réalisée de préférence en présence d'un catalyseur de transestérification. Ce catalyseur peut être introduit au début ou au cours de l'étape 1. Le catalyseur peut, alternativement être ajouté au début ou au cours de l'étape 2, en particulier s'il est sensible à l'eau et/ou à l'alcool éventuellement formé dans l'étape 1. De préférence, le catalyseur est introduit au début de l'étape 2. Ce catalyseur peut être par exemple un catalyseur à base de zirconium.

Les oligomères formés à l'issue de l'étape 1 ont de préférence des terminaisons OH.

Le nombre de motifs p peut varier dans une large mesure, notamment en fonction des caractéristiques désirées pour l'oligomère. p varie de préférence entre 5 et 20, préférentiellement entre 10 et 17.

La première et/ou la seconde étapes peuvent être réalisées en présence d'au moins un agent de branchement, lequel prend part à la formation d'oligomères et/ou à la transestérification en tant que comonomère. De préférence, la première étape est réalisée en présence d'au moins un agent de branchement.

L'homme du métier optimise les conditions de réaction pour que les oligomères obtenus à l'issue de l'étape 1 possèdent les caractéristiques (notamment valeur de p et/ou nature des terminaisons) désirées. L'étape 1 se fait avantageusement sous atmosphère inerte. L'étape 1 peut se faire à pression atmosphérique ou légèrement sous pression, par exemple entre 1 et 4 bars. La température lors de l'étape 1 est avantageusement comprise entre 190 et 235°C.

La seconde étape est avantageusement réalisée à pression réduite, notamment à une pression inférieure à 5 mbar, de préférence à une pression comprise entre 0,01 et 1 mbar, par exemple entre 0,5 et 1 mbar.

La seconde étape est réalisée avec élimination partielle ou totale du 1,4-butanediol produit lors du couplage de deux oligomères.

La température lors de l'étape 2 est avantageusement comprise entre 200 et 260°C.

Dans la présente invention, lorsqu'on réalise une « élimination partielle ou totale » d'un constituant issu d'une réaction, on préfère qu'au moins 90% des moles de ce constituant soient éliminées de ce réacteur, voire au moins 95%, voire au moins 99%. L'élimination peut être réalisée en continu lors de la réaction, par exemple par distillation.

Le nombre de motifs n peut varier dans une large mesure, notamment en fonction des caractéristiques désirées pour le polymère. n est supérieur ou égal à p. n varie avantageusement entre 60 et 500, préférentiellement dans la gamme de 200 à 350.

La silice est ajoutée de préférence au début du procédé de synthèse, c'est-à-dire au début de l'étape 1.

Alternativement, la silice peut être ajoutée en cours de polymérisation, c'est-à-dire au cours de l'étape 1, entre l'étape 1 et l'étape 2 (c'est-à-dire au début de l'étape 2), ou au cours de l'étape 2.

L'expression « au début » d'une étape signifie à un moment auquel les réactifs de l'étape n'ont pas commencé à réagir. L'expression « au cours » d'une étape signifie à un moment auquel la réaction entre les réactifs a déjà commencé, mais n'est pas encore terminée. Il s'agit d'un moment où une partie des réactifs ont déjà été transformés en produit, et/ou en composé intermédiaire.

La silice colloïdale est de préférence ajoutée *in situ,* au début de l'étape 1, par exemple au moment du chargement des réactifs.

Un objet de l'invention est un procédé de préparation de composites à base de PBS et de silice, comprenant l'ajout de silice colloïdale *in situ* au mélange réactionnel comprenant de l'acide succinique et du 1,4-butanediol, ou comprenant un produit issu de la réaction entre l'acide succinique et le 1,4-butanediol. De préférence, le procédé de préparation selon l'invention comprend les deux étapes de formation d'oligomères et de transestérification telles que décrites ci-dessus.

Un autre objet de la présente invention est un composite à base de PBS et de silice obtenu par le procédé selon l'invention.

La masse totale du composite est constituée de la somme des masses de PBS obtenu et de silice.

### Catalyseur

Le catalyseur utilisable pour la polymérisation peut être n'importe quel catalyseur classiquement utilisé pour la polymérisation du PBS pour la première et/ou la seconde étape du procédé de l'invention.

Un catalyseur utile à la première étape d'estérification peut être choisi en particulier parmi l'acide para-toluène sulfonique (APTS) et l'acide méthane sulfonique (AMS).

Les catalyseurs pouvant être utilisés en particulier lors de la seconde étape de transestérification sont par exemple ceux décrits aux paragraphes [0090] à [0094] du brevet EP 1882712 B1. A titre d'exemples, on peut citer les catalyseurs, organiques ou inorganiques, comprenant un élément chimique choisi parmi le titane, le germanium, l'antimoine, l'étain, le bismuth, l'hafnium, le magnésium, l'aluminium, le lithium ou un mélange de ces catalyseurs. Il peut s'agir par exemple d'oxyde de germanium, de tétra-n-butylate de zirconium ou de tétra-n-butylate de titane. La quantité de catalyseur utilisée peut être comprise entre 50 ppm et 1500 ppm en masse d'élément par rapport à la masse totale du composite, de préférence entre 100 et 1200 ppm. Dans un mode de réalisation de l'invention, le catalyseur comprend du zirconium comme élément, de préférence il s'agit du tétra-n-butylate de zirconium. Préférentiellement, la quantité de catalyseur de zirconium est comprise entre 600 et 1200 ppm en masse d'élément par rapport à la masse totale du composite. L'utilisation du zirconium permet notamment de limiter la coloration du composite obtenu.

### Acide succinique

L'acide succinique utilisé selon la première variante de l'invention pour la synthèse du composite est de préférence issu d'agro-ressources, ou bio-sourcé, mais peut également être pétrosourcé. Par exemple, l'acide succinique peut être produit par fermentation en utilisant des matières premières non fossiles renouvelables, notamment selon l'enseignement de la demande WO 2011064151.

### Diester d'acide succinique

Le diester d'acide succinique utilisé pour la synthèse du composite selon la seconde variante de l'invention est avantageusement un succinate de dialkyle, par exemple un succinate de diméthyle ou de diéthyle, préférentiellement un succinate de diméthyle. Il peut être obtenu par réaction d'estérification de l'acide succinique décrit ci-dessus.

### 1,4-Butanediol

Le 1,4-butanediol utilisé dans la présente invention est de préférence issu de l'hydrogénation de l'acide succinique bio-sourcé ou de procédés fermentaires en employant les micro-organismes adéquats. Il est également possible d'employer du 1,4-butanediol pétrosourcé.

### Silice colloïdale :

La silice utilisée dans la présente invention est une silice colloïdale, de préférence dispersée dans l'eau. Le diamètre moyen en nombre de la silice est généralement inférieur à 100 nm, de préférence inférieur à 20 nm, de préférence il est égal à 12 nm. Le diamètre moyen des particules de silices est mesuré à l'aide de microscopie électronique à transmission.

Une silice colloïdale est, comme généralement admis dans l'art, une suspension stable de particules non agglomérées de silice, ces particules présentant avantageusement une forme proche de la sphéricité.

La silice colloïdale peut être une suspension de silice dans de l'eau, dont la quantité massique de silice va de 1 à 50 % par rapport à la masse totale d'eau et de silice dispersée, préférentiellement de 10 à 40 %.

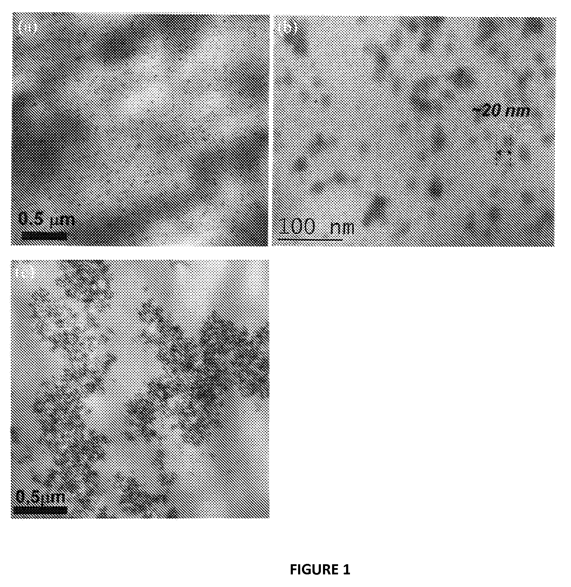

L'utilisation dans le procédé de l'invention de silice colloïdale est très aisée et permet notamment d'obtenir une dispersion très homogène de la silice dans le composite, comme on peut le voir par exemple en microscopie électronique en transmission (figure 1).

La surface spécifique de la silice colloïdale utilisée dans la présente invention est généralement supérieure ou égale à environ 50 m²/g, de préférence supérieure ou égale à environ 200 m²/g.

Parmi les silices colloïdales utilisables dans la présente invention, on peut citer les silices vendues sous la dénomination Klebosol^{®} en suspension dans l'eau, notamment les silices de références 30 HB 50 K (50 nm) et 20H12 (12 nm) vendues par la société AZ Electronic Materials.

La quantité de silice colloïdale incorporée au PBS peut varier dans une large mesure en fonction des caractéristiques désirées pour le film synthétisé. En particulier, la quantité de silice colloïdale peut être comprise entre (bornes exclues) 0 et 5%, de préférence entre 0,1 et 1%, en particulier entre 0,4 et 1% en masse de silice sèche par rapport à la masse totale de composite. La quantité de silice colloïdale peut être comprise entre 0,6% et 0,8% en masse de silice sèche par rapport à la masse totale de composite. De façon hautement préférée, la quantité de silice colloïdale est comprise entre 0,45% et 0,75% en masse de silice sèche par rapport à la masse totale de composite. L'incorporation de silice colloïdale selon l'invention durant la synthèse permet d'obtenir plus rapidement un polymère apte à être transformé sous forme de film. Ainsi, le temps de résidence du polymère dans le réacteur est diminué, ce qui minimise les processus de dégradation d'une part, et la coloration du polymère d'autre part.

### Agent de branchement

La matrice polymère (PBS) des composites décrits dans la présente invention peut contenir ou non au moins un comonomère dont la fonctionnalité est supérieure à 2, en tant qu'agent de branchement. Dans la présente invention, les termes « poly(butylène succinate) » et « PBS » incluent également un PBS comprenant au sein du polymère un ou des monomères d'agent de branchement. Les fonctions réactives de ces agents de branchement peuvent être de type acide carboxylique, hydroxyde, époxyde, ou isocyanate, de préférence acide carboxylique ou hydroxyde. La fonctionnalité de ces agents de branchements peut être de 3 à 6, de préférence de 3 à 4. Parmi les agents de branchements classiquement utilisés on peut citer : l'acide malique, l'acide citrique ou isocitrique, l'acide tartrique, l'acide trimesique, l'acide tricarballylique, l'acide cyclopentane tétracarboxylique, le glycérol, le pentaérythritol, le triméthylolpropane ou des éthers de ces polyols tels le propoxylate de glycérol (commercialisé sous le nom de Voranol 450 par Dow Chemical). Dans la présente invention, la quantité de cet agent de branchement peut varier entre 0 et 1 mol %, de préférence entre 0,02 et 0,2 mol %, par rapport à l'acide succinique.

### Mise en forme des composites selon l'invention

Les polymères thermoplastiques peuvent être mis en forme de différentes façons, notamment par extrusion, par extrusion gonflage (gonflage) ou extrusion soufflage de gaine ou de corps creux, par injection, par filage textile ou par calandrage. La mise en forme par gonflage permet de générer des films de polymère thermoplastique de grande dimension.

Les composites selon l'invention sont particulièrement adaptés à la mise en forme par gonflage.

Dans le cas où on synthétise un composite obtenu selon le procédé de l'invention, et un PBS selon un procédé identique mais sans utiliser de silice colloïdale, la Demanderesse a constaté que le composite présente une meilleure gonflabilité que le PBS équivalent fabriqué sans silice. Les composites selon l'invention sont donc plus gonflables que les PBS classiques sans charge de silice. En effet, la bulle créée lors du gonflage est excellente lorsque l'on gonfle les composites fabriqués selon l'invention. De manière classique, on explique la gonflabilité d'un polymère par son aptitude à pouvoir être étiré de manière bidimensionnelle. La gonflabilité d'un polymère ne peut être reliée directement à sa viscosité. La gonflabilité des composites dans la présente invention est évaluée par étude du taux d'étirage (Take-Up Ratio, TUR) limite dans une manipulation d'extrusion gonflage (voir exemples 1 à 3 et exemple comparatif 4).

Un objet de l'invention est un procédé de gonflage d'un film d'un composite selon l'invention. Le procédé de gonflage comprend la mise en forme du composite selon l'invention par gonflage, aussi nommé « Film Blowing » en anglais.

Ce procédé, bien connu de l'homme du métier, est généralement réalisé en alimentant en continu la gaine formée par un polymère à l'état fondu à l'aide d'une extrudeuse ; on parle également d'extrusion gainage ou d'extrusion soufflage de gaine.

Un autre objet de l'invention est un film de composite selon l'invention et obtenu de préférence par le procédé de gonflage selon l'invention.

Le film selon l'invention présente généralement une épaisseur comprise entre 5 et 1000 µm, de préférence entre 10 et 50 µm. Les particules de silice comprises dans le film sont telles que décrites dans le paragraphe « silice colloïdale » ci-avant.

### Propriétés mécaniques des composites et films selon l'invention

Les films selon l'invention ont une élongation à la rupture supérieure à celle obtenue pour des films de PBS sans charge de silice, ce qui diffère des observations de Vassiliou. L'élongation à la rupture longitudinale ou transversale des films selon l'invention est par exemple comprise entre 400 et 1200%, de préférence entre 600 et 800%, dans des conditions dans lesquelles un film de PBS classique aura une élongation moyenne longitudinale ou transversale d'environ 200%.

Le module et la contrainte à la rupture des films selon l'invention sont globalement similaires à ceux obtenus pour des films de PBS classiques sans charge de silice.

Les composites selon l'invention ont une viscosité réduite en solution (IV) (voir conditions des exemples) supérieure à celle d'un PBS classique sans charge de silice, notamment leur viscosité réduite en solution est comprise entre 200 et 240 mL/g, par exemple entre 200 et 220 mL/g. Les composites selon l'invention ont une viscosité du fondu (MFR - melt flow rate) sous contrainte inférieure à celle d'un PBS réalisé dans les mêmes conditions (température et temps de transestérification identiques) sans charge de silice. La viscosité du fondu des composites selon l'invention mesurée à une température de 190°C est avantageusement comprise entre 3 et 30 g/10 min, préférentiellement entre 10 et 30 g/10 min pour une contrainte de 2,16 kg.

Les composites selon l'invention sont gonflables, tout en conservant de préférence une faible coloration, c'est-à-dire que le composite présente, selon la méthode connue de mesure de CIE Lab, des paramètres préférentiellement tels que L*>60, a*<2 et b*<2.

La coloration est évaluée à l'aide des paramètres de Hunter modifiés L*, a* et b*. Les valeurs de L* mesurent la luminosité, oscillant entre 0 (pour le noir) et 100 (pour le blanc) ; les valeurs de a* mesurent les tonalités rouges (valeurs positives) et vertes (valeurs négatives) ; les valeurs de b* mesurent les tonalités jaunes (valeurs positives) et bleues (valeurs négatives).

D'autres aspects et avantages de la présente demande apparaîtront à la lecture des exemples qui suivent, qui doivent être considérés comme illustratifs et non limitatifs.

### DESCRIPTION DES FIGURES

Figure 1 : Images de MET de films de polymères :
(a) et (b) : film selon l'invention obtenu par gonflage d'un composite selon l'invention à base de PBS et de silice colloïdale
(c): film d'un composite à base de PBS et de silice pyrogénée.

### EXEMPLES

L'invention est illustrée par les exemples 1 à 3 et les exemples comparatifs 4 et 5 dans lesquels des polybutylène succinates vierges (c'est-à-dire sans nanocharge de silice) et modifiés (c'est-à-dire comprenant une nanocharge de silice colloïdale et pyrogénée) sont employés pour des applications de gonflage de films.

Les propriétés des polymères ont été étudiées avec les techniques suivantes :
La quantité de fonctions carboxyliques terminales (acid value, AV) est déterminée par titrage potentiométrique. Le polymère est tout d'abord solubilisé dans du chloroforme, puis titré par une solution d'hydroxyde de sodium dans le méthanol. Le résultat est par la suite exprimé comme l'équivalent d'hydroxyde de potassium (en mg/g) nécessaire pour neutraliser la solution.

La coloration du polymère est mesurée sur les granulés à l'aide d'un spectrophotomètre de type Konica Minolta CD2300. Les résultats sont exprimés dans le référentiel de Hunter à l'aide des paramètres L*, a*, et b*.

Les viscosités fondues (MFR, Melt Flow Rate) des différents polyesters sont examinées à l'aide d'un gradeur de type *ats farr extrusion plastometer.* Toutes les mesures ont été effectuées suivant la norme ASTM D 1238-82 à 190°C avec un poids de 2,16 kg.

D'autre part, la viscosité réduite en solution est évaluée à l'aide d'un viscosimètre capillaire Ubbelohlde à 25°C dans un mélange équimassique de phénol et d'*ortho*-dichlorobenzène après dissolution du polymère à 130°C sous agitation. Pour ces mesures, la concentration de polymère introduite est de 0,5g/L.

Les propriétés thermiques (la transition vitreuse, la température de cristallisation, la température de fusion et le taux de cristallinité) sont déterminées par calorimétrie différentielle à balayage à 10°C/min (DSC, Differential Scanning Calorimetry).

Les propriétés mécaniques des films obtenus par extrusion gonflage sont examinées en traction uniaxiale à la vitesse de 50mm/min. Les éprouvettes de type haltère utilisées ont les dimensions suivantes : une épaisseur d'environ 30 à 50 µm, une largeur de 4 mm et une longueur nominale de 10 mm.

### Préparation des polyesters :

### Exemple 1 :

Dans un réacteur de 7,5L sont ajoutés 1513,6 g de 1,4-butanediol, 1889,0g d'acide succinique et 68,8 g d'une dispersion à 20% massique de silice colloïdale (Klebosol 20H12, diamètre 12nm), soit un taux de silice de 0,5% massique par rapport au polymère final. Le mélange réactionnel est ensuite chauffé à 225°C (4°C/min) sous 2 bars de pression et sous agitation constante (150 tr/min). Le taux d'estérification est estimé à partir de la quantité de distillat collectée. Puis, la pression est réduite à 0,7 mbar et la température amenée à 230°C. Pendant la décompression, 11,586 g de tétra-n-butylate de zirconium sont ajoutés comme catalyseur. Ces conditions de transestérification sont maintenues pendant 350min. Enfin, un jonc de polymère est coulé par la vanne de fond du réacteur, refroidi dans un bac d'eau thermo-régulé et découpé sous forme de granulés d'environ 15 mg.

La résine ainsi obtenue a une viscosité fondue de 27 g/10min (190°C, 2,160 kg), une viscosité réduite en solution de 208 mL/g et une acidité de 2,7 mg/g. La température de fusion du polymère est de 116°C, sa transition vitreuse de -31°C, sa température de cristallisation de 57°C et son taux de cristallinité de 30%. La coloration du polymère, exprimée selon les paramètres de Hunter, est la suivante : L*= 73, a*=-1,0 et b*=-1,0.

### Exemple 2 :

Dans un réacteur de 7,5L sont ajoutés 1513,6 g de 1,4-butanediol, 1886,3g d'acide succinique, 5,58 g d'acide malique et 68,8 g d'une dispersion à 20% massique de silice colloïdale (Klebosol 20H12, diamètre 12nm), soit un taux de silice de 0,5% massique par rapport au polymère final. Le mélange réactionnel est ensuite chauffé à 225°C (4°C/min) sous 2 bars de pression et sous agitation constante (150 tr/min). Le taux d'estérification est estimé à partir de la quantité de distillat collectée. Puis, la pression est réduite à 0,7 mbar et la température amenée à 230°C. Pendant la décompression, 11,586 g de tétra-n-butylate de zirconium sont ajoutés comme catalyseur. Ces conditions de transestérification sont maintenues pendant 350min. Enfin, un jonc de polymère est coulé par la vanne de fond du réacteur, refroidi dans un bac d'eau thermo-régulé et découpé sous forme de granulés d'environ 15 mg.

La résine ainsi obtenue a une viscosité fondue de 11 g/10min (190°C, 2,160 kg), une viscosité réduite en solution de 222 mL/g et une acidité de 3,1 mg/g. La température de fusion du polymère est de 113°C, sa transition vitreuse de -31°C, sa température de cristallisation de 59°C et son taux de cristallinité de 30%. La coloration du polymère, exprimée selon les paramètres de Hunter, est la suivante : L*= 76, a*=-1,4 et b*=-0,2.

### Exemple 3 :

Dans un réacteur de 7,5L sont ajoutés 1513,6 g de 1,4-butanediol, 1889,0g d'acide succinique, et 96,4 g d'une dispersion à 20% massique de silice colloïdale (Klebosol 20H12, diamètre 12nm), soit un taux de silice de 0,7% massique par rapport au polymère final. Le mélange réactionnel est ensuite chauffé à 225°C (4°C/min) sous 2 bars de pression et sous agitation constante (150 tr/min). Le taux d'estérification est estimé à partir de la quantité de distillat collectée. Puis, la pression est réduite à 0,7 mbar et la température amenée à 230°C. Pendant la décompression, 11,586 g de tétra-n-butylate de zirconium sont ajoutés comme catalyseur. Ces conditions de transestérification sont maintenues pendant 350min. Enfin, un jonc de polymère est coulé par la vanne de fond du réacteur, refroidi dans un bac d'eau thermo-régulé et découpé sous forme de granulés d'environ 15 mg.

La résine ainsi obtenue a une viscosité fondue de 25 g/10min (190°C, 2,160 kg), une viscosité réduite en solution de 214 mL/g et une acidité de 2,7 mg/g. La température de fusion du polymère est de 116°C, sa transition vitreuse de -32°C, sa température de cristallisation de 60°C et son taux de cristallinité de 29%. La coloration du polymère, exprimée selon les paramètres de Hunter, est la suivante : L*= 75, a*=-1,0, et b*=-1,2.

### Exemple comparatif 4 :

Dans un réacteur de 7,5L sont ajoutés 1513,6 g de 1,4-butanediol et 1889,0g d'acide succinique. Le mélange réactionnel est ensuite chauffé à 225°C (4°C/min) sous 2 bars de pression et sous agitation constante (150 tr/min). Le taux d'estérification est estimé à partir de la quantité de distillat collectée. Puis, la pression est réduite à 0,7 mbar et la température amenée à 230°C. Pendant la décompression, 11,586 g de tétra-n-butylate de zirconium sont ajoutés comme catalyseur. Ces conditions de transestérification sont maintenues pendant 350min. Enfin, un jonc de polymère est coulé par la vanne de fond du réacteur, refroidi dans un bac d'eau thermo-régulé et découpé sous forme de granulés d'environ 15 mg.

La résine ainsi obtenue a une viscosité fondue de 50-60 g/10min (190°C, 2,160 kg), une viscosité réduite en solution de 160 mL/g et une acidité de 2,2 mg/g. La température de fusion du polymère est de 116°C, sa transition vitreuse de -32°C, sa température de cristallisation de 60°C et son taux de cristallinité de 30%. La coloration du polymère, exprimée selon les paramètres de Hunter, est la suivante : L*= 74, a*=-0.8, et b*=-0.9.

### Exemple comparatif 5 :

Dans un réacteur de 7,5L sont ajoutés 1513,6 g de 1,4-butanediol, 1889,0g d'acide succinique et de 114,8 g d'une dispersion à 12% massique de silice pyrogénée (HDK N20 D2012, Wacker Chemie), soit un taux de silice de 0,5% massique par au polymère final. Le mélange réactionnel est ensuite chauffé à 225°C (4°C/min) sous 2 bars de pression et sous agitation constante (150 tr/min). Le taux d'estérification est estimé à partir de la quantité de distillat collectée. Puis, la pression est réduite à 0,7 mbar et la température amenée à 230°C. Pendant la décompression, 11,586 g de tétra-n-butylate de zirconium sont ajoutés comme catalyseur. Ces conditions de transestérification sont maintenues pendant 350min. Enfin, un jonc de polymère est coulé par la vanne de fond du réacteur, refroidi dans un bac d'eau thermo-régulé et découpé sous forme de granulés d'environ 15 mg.

La résine ainsi obtenue a une viscosité fondue de 22 g/10min (190°C, 2,160 kg), une viscosité réduite en solution de 203 mL/g et une acidité de 3,4 mg/g. La température de fusion du polymère est de 113°C, sa transition vitreuse de -34°C, sa température de cristallisation de 65°C et son taux de cristallinité de 32%.

Cet exemple comparatif est directement comparable avec l'exemple 1.

La gonflabilité de ces différents polyesters est comparée par extrusion gonflage, pour un taux de gonflage de la gaine (Blow Up Ratio) gardé constant aux alentours de 3. Puis, pour chacun de ces échantillons, le taux d'étirage longitudinal de la gaine (Take Up Ratio - TUR) maximal est déterminé. Les résultats de ces essais de gonflage ainsi que les propriétés des films associées sont donnés dans les tableaux suivants :

| | Débit d'extrusion (kg/h) | Taux d'étirage longitudinal | | | | | | | | | |
|---|---|---|---|---|---|---|---|---|---|---|---|
| | | 2 | 4 | 6 | 8 | 10 | 12 | 14 | 16 | 18 | 20 |
| Ex.1 | 2,4 | | | ++ | ++ | ++ | + | - | -- | | |
| | 3,6 | | ++ | ++ | ++ | + | - | -- | | | |
| Ex.2 | 2,4 | | | ++ | ++ | + | - | -- | | | |
| | 3,6 | | ++ | ++ | + | | -- | | | | |
| Ex.3 | 2,4 | | | ++ | ++ | ++ | ++ | - | -- | | |
| | 3,6 | | ++ | ++ | ++ | ++ | ++ | ++ | ++ | - | - |
| CEx.4 | 2,4 | | | GI | | | | | | | |
| | 3,6 | | GI | | | | | | | | |

| | | | | | | | | | | | |
|---|---|---|---|---|---|---|---|---|---|---|---|
| *++ : Aucun trou observé dans la gaine formée et gaine stable;* ; *+ : Quelques trous observés dans la gaine et gaine légèrement instable;* *-: Quelques trous observés dans la gaine et gaine instable;* *--: Des trous importants observés dans la gaine et gaine très instable;* *GI: gonflage de la gaine impossible* | | | | | | | | | | | |

| | Module (MPa) | | Contrainte à la rupture (MPa) | | Elongation à la rupture (%) | |
|---|---|---|---|---|---|---|
| | Par. | Perp. | Par. | Perp. | Par. | Perp. |
| Ex.1 | 100 | 100 | 23 | 21 | 780 | 600 |
| Ex.2 | 120 | 150 | 28 | 25 | 670 | 570 |
| Ex.3 | 130 | 90 | 26 | 20 | 700 | 720 |
| CEx.4 | 200 | 145 | 28 | 20 | 70 | 20 |
| CEx.5 | 100 | 90 | 16 | 20 | 350 | 540 |

| | | | | | | |
|---|---|---|---|---|---|---|
| *Par. : Parallèle au sens d'extrusion* / *Perp. : Perpendiculaire au sens d'extrusion Essais réalisés selon la norme ISO 527-3.* | | | | | | |

On peut conclure des exemples 1 à 3 que le composite selon l'invention présente une élongation à la rupture importante et que cette élongation est homogène, ceci quel que soit le sens de sollicitation du matériau. Au contraire, les composites de l'art antérieur réalisés à partir de silice pyrogénée, notamment ceux de Vassiliou, présentent des élongations à la rupture plus faibles et, surtout, une élongation qui est inhomogène selon le sens de sollicitation mécanique.

## Revendications

1. Procédé de préparation d'un composite à base de poly(butylène succinate) (PBS) et de silice, comprenant les deux étapes suivantes :
- formation d'oligomères par réaction d'acide succinique ou d'au moins un diester d'acide succinique avec du 1,4-butanediol (étape 1), et
- transestérification et couplage des oligomères formés à la première étape (étape 2),
et comprenant l'ajout de silice colloïdale *in situ* au début ou au cours de l'étape 1 ou au début ou au cours de l'étape 2.

2. Procédé selon la revendication 1, dans lequel le diamètre moyen en nombre de la silice est inférieur à 100 nm, ce diamètre moyen étant mesuré à l'aide de microscopie électronique à transmission.

3. Procédé selon la revendication 1 ou 2, dans lequel la quantité de silice est comprise entre 0 et 5 % (bornes exclues) en masse de silice sèche par rapport à la masse totale de composite.

4. Procédé selon l'une quelconque des revendications 1 à 3, dans lequel l'étape de formation d'oligomères est réalisée en présence d'un agent de branchement.

5. Procédé selon l'une quelconque des revendications 1 à 4, dans lequel l'étape de formation d'oligomères et/ou l'étape de transestérification sont réalisées en présence d'un catalyseur.

6. Procédé selon l'une quelconque des revendications 1 à 5, dans lequel l'étape 1 est réalisée à une pression comprise entre 1 et 4 bars et à une température comprise entre 190 et 235°C.

7. Procédé selon l'une quelconque des revendications 1 à 6, dans lequel l'étape 2 est réalisée à une pression inférieure à 5 mbar et à une température comprise entre 200 et 260°C.

8. Composite à base de PBS et de silice obtenu par le procédé selon l'une quelconque des revendications 1 à 7.

9. Composite selon la revendication 8, dans lequel la viscosité réduite en solution du composite est compris entre 200 et 240 mL/g.

10. Composite selon la revendication 8 ou 9, dans lequel les paramètres de Hunter du composite sont tels que L*>60, a*<2 et b*<2.

11. Procédé de gonflage d'un film de composite, comprenant la mise en forme dudit composite selon l'une quelconque des revendications 8 à 10 par gonflage.

12. Film de composite à base de PBS et de silice obtenu par le procédé de gonflage selon la revendication 11.

## Patentansprüche

1. Verfahren zur Herstellung eines Komposits aus Poly(butylensuccinat) (PBS) und Silica, umfassend die beiden folgenden Schritte:
- Bildung von Oligomeren durch Reaktion von Bernsteinsäure oder wenigstens eines Bernsteinsäurediesters mit 1,4-Butandiol (Schritt 1), und
- Transveresterung und Kopplung der im ersten Schritt gebildeten Oligomere (Schritt 2),
und umfassend die Zugabe von kolloidalem Silica *in situ* zu Beginn oder im Verlauf von Schritt 1 oder zu Beginn oder im Verlauf von Schritt 2.

2. Verfahren gemäß Anspruch 1, wobei der zahlengemittelte Durchmesser des Silicas kleiner als 100 nm ist, wobei dieser mittlere Durchmesser mithilfe der Transmissionselektronenmikroskopie gemessen wird.

3. Verfahren gemäß Anspruch 1 oder 2, wobei die Menge an Silica zwischen 0 und 5 Gew.-% (ausschließlich der Grenzen) Trockenmasse Silica bezogen auf die Gesamtmasse des Komposits beträgt.

4. Verfahren gemäß einem der Ansprüche 1 bis 3, wobei der Schritt der Oligomerbildung in Gegenwart eines Verzweigungsagens durchgeführt wird.

5. Verfahren gemäß einem der Ansprüche 1 bis 4, wobei der Schritt der Oligomerbildung und/oder der Schritt der Transveresterung in Gegenwart eines Katalysators durchgeführt werden.

6. Verfahren gemäß einem der Ansprüche 1 bis 5, wobei Schritt 1 bei einem Druck zwischen 1 und 4 Bar und bei einer Temperatur zwischen 190 und 235°C durchgeführt wird.

7. Verfahren gemäß einem der Ansprüche 1 bis 6, wobei Schritt 2 bei einem Druck kleiner als 5 mBar und bei einer Temperatur zwischen 200 und 260°C durchgeführt wird.

8. Komposit aus PBS und Silica, erhalten mit einem Verfahren gemäß einem der Ansprüche 1 bis 7.

9. Komposit gemäß Anspruch 8, wobei die reduzierte Viskosität in Lösung des Komposits zwischen 200 und 240 mL/g ist.

10. Komposit gemäß Anspruch 8 oder 9, wobei die Hunter Parameter des Komposits zum Beispiel L*>60, a*<2 und b*<2 sind.

11. Verfahren zur Quellung eines Kompositfilms, umfassend das Informbringen besagten Komposits gemäß einem der Ansprüche 8 bis 10 mittels Quellung.

12. Kompositfilm aus PBS und Silica, erhalten mit dem Verfahren zur Quellung gemäß Anspruch 11.

## Claims

1. A process for preparing a poly(butylene succinate) (PBS)- and silica-based composite, comprising the following two steps:
- formation of oligomers by reacting succinic acid or at least one succinic acid diester with 1,4-butanediol (step 1), and
- transesterification and coupling of the oligomers formed in the first step (step 2),
and comprising the addition of colloidal silica *in situ* at the beginning of or during step 1 or at the beginning of or during step 2.

2. The process as claimed in claim 1, wherein the number-average diameter of the silica is less than 100 nm, wherein this average diameter is measured by Transmission Electron Microscopy.

3. The process as claimed in claim 1 or 2, wherein the amount of silica is between 0 and 5% (limits excluded) by weight of dry silica relative to the total weight of composite.

4. The process as claimed in any one of claims 1 to 3, wherein the oligomer formation step is carried out in the presence of a branching agent.

5. The process as claimed in any one of claims 1 to 4, wherein the oligomer formation step and/or the transesterification step are carried out in the presence of a catalyst.

6. The process as claimed in any one of claims 1 to 5, wherein step 1 is carried out at a pressure of between 1 and 4 bar and at a temperature of between 190 and 235°C.

7. The process as claimed in any one of claims 1 to 6, wherein step 2 is carried out at a pressure below 5 mbar and at a temperature of between 200 and 260°C.

8. A PBS- and silica-based composite obtained by means of the process as claimed in any one of claims 1 to 7.

9. The composite as claimed in claim 8, wherein the reduced viscosity in solution of the composite is between 200 and 240 ml/g.

10. The composite as claimed in claim 8 or 9, wherein the Hunter parameters of the composite are such that L*>60, a*<2 and b*<2.

11. A process for the film blowing of a film of composite, comprising the forming of said composite as claimed in any one of claims 8 to 10 by film blowing.

12. A film of PBS- and silica-based composite obtained by means of the film blowing process as claimed in claim 11.
